# EUROPEAN PATENT APPLICATION

(11) **EP 4 287 120 A1**
(43) Date of publication of application: **06.12.2023**
(21) Application number: 22197407.4
(22) Date of filing: 23.09.2022
(51) Int. Cl.: G06T 7/33

(54) **GUIDANCE DURING MEDICAL PROCEDURES**

(30) Priority: 01.06.2022 US 202263347716 P
(71) Applicant: Koninklijke Philips N.V., 5656 AG Eindhoven (NL)
(72) Inventor: LEE, Brian C., Eindhoven (NL); SINHA, Ayushi, Eindhoven (NL); VARBLE, Nicole, 5656AG Eindhoven (NL)
(74) Representative: Philips Intellectual Property & Standards

(57) **Abstract**

The present invention relates to medical guidance. In order to provide a facilitated way of providing improved images about a current situation, a device (10) for guidance during medical procedures is provided. The device comprises a data input (12), a data processor (14) and an output interface (16). The data input is configured to provide 3D image data of a region of interest of a subject and to provide current 2D image data of the region of interest. The data processor is configured to register the current 2D image data with the 3D image data to determine a first transformation, to identify nonlinear and linear components of the determined first transformation, to apply the identified linear components of the first transformation to the 3D image data and to generate a projection image from the 3D image data with the linear components applied to the 3D image data. The output interface is configured to provide the projection image as guidance during a medical procedure.

## Description

### FIELD OF THE INVENTION

The present invention relates to medical guidance. The present invention relates in particular to a device for guidance during medical procedures, to a system for guidance during medical interventions and to a method for guidance during medical procedures.

### BACKGROUND OF THE INVENTION

Image-guided endoscopic interventions remain challenging in areas of the body where image quality and clarity are distorted by the natural movement of the patient's body. As an example, bronchoscopic procedures may require a high level of skill to navigate through the airways and avoid critical structures. One of the primary roadblocks to further improving outcomes of endoscopic techniques in these areas is the image distortion caused by both the natural, cyclical movement of the patient's body and the motion of the table and imaging system (particularly in the case of mobile fluoroscopic c-arm systems). X-ray fluoroscopy is used for intraoperative imaging guidance due to the simplicity of its use, the favorable field of view and the ability to visualize the lung airways. However, complex structures like the lung airways are difficult to visualize and understand particularly under the influence of high frequency cyclical motions like breathing and cardiac motion. During fluoroscopy-guided procedures, movement of one part of the body relative to another becomes difficult to disentangle and static projections that have been previously registered can become misaligned. For example, US 10682112 B2 relates to suppression of independent movements in series of 2D X-ray fluoroscopy images using a 3D pre-operative volume. Examples include fluoroscopically-guided lung bronchoscopy where patient breathing prevents clear visualization of the target anatomy and surgical devices, which may reduce the diagnostic yield of biopsies in the peripheral airways, as well as cardiac procedures like valve repairs where cardiac motion makes device-target confirmation challenging.

### SUMMARY OF THE INVENTION

There may thus be a need to provide a facilitated way of providing improved images about a current interventional situation.

The object of the present invention is solved by the subject-matter of the independent claims; further embodiments are incorporated in the dependent claims. It should be noted that the following described aspects of the invention apply also for the device for guidance during medical procedures, for the system for guidance during medical interventions and for the method for guidance during medical procedures.

According to the present invention, a device for guidance during medical procedures is provided. The device comprises a data input, a data processor and an output interface. The data input is configured to provide 3D image data of a region of interest of a subject. The data input is also configured to provide current 2D image data of the region of interest. The data processor is configured to register the current 2D image data with the 3D image data to determine a first transformation. The data processor is also configured to identify non-linear and linear components of the determined first transformation. The data processor is further configured to apply the identified linear components of the first transformation to the 3D image data. The data processor is furthermore configured to generate a projection image from the 3D image data with the linear components applied to the 3D image data. The output interface is configured to provide the projection image as guidance during a medical procedure.

As an effect, improved guidance is provided while avoiding an increase in radiation dosage, which would be implicit, for example, when increasing image resolution and framerate. The virtual fluoroscopy incorporates patient-specific information for the purpose of view stabilization. As a further effect, virtual fluoroscopy has the advantage over virtual renderings that the virtual fluoroscopy is less challenging to use due to the similarity to the live fluoroscopy image. Another effect is an increased confidence in the display on the side of the user, e.g. surgeons. This also addresses complex navigation in tortuous and moving vessels/airways.

According to an example, the data input is configured to provide the 3D image data as pre-operative 3D image data. In an option, pre-operative CT image data is provided. The data input is configured to provide the current 2D image data as 2D X-ray image data. The data processor is configured to generate the projection image with a viewing direction aligned to a viewing direction of the 2D X-ray image data. As an option, the data processor is configured to provide the projection image as a digitally reconstructed radiograph visualization.

According to an example, the data input is configured to provide the current image comprising image data relating to an interventional device inserted in the region of interest. The data processor is configured to perform a segmentation for the current 2D image data to identify a representation of the device. The data processor is also configured to apply a second transformation to the representation of the device. The data processor is further configured to combine the transformed representation of the device with the generated projection image.

According to an example, the data processor is configured to provide the second transformation as an inverse of the non-linear component of the first transformation.

According to an example, the data processor is configured to overlay the transformed representation of the device to the generated projection image. In an option, the data processor is configured to provide the transformed representation as a fluoro-like overlay to the generated projection image.

According to an example, the data processor is configured to provide the representation of the device comprising a segmented image portion of the 2D image. The data processor is also configured to apply the transformation to the segmented image portion.

According to an example, the data input is configured to provide tracking data of an external tracking device tracking an interventional device inserted in the region. The data processor is configured to track the interventional device in relation to the subject based on the tracking data. The data processor is also configured to align the coordinate space of the tracked device with an imaging coordinate space. The data processor is further configured to apply the second transformation to a graphical representation of the device. The data processor is furthermore configured to combine the transformed representation of the device with the generated projection image.

According to the present invention, also a system for guidance during medical interventions is provided. The system comprises an image data source, a medical imaging system, a device for guidance during medical procedures according to one of the preceding examples and a display arrangement. The image data source is configured to provide 3D image data of a region of a region of interest of a subject. The medical imaging system is configured to provide current 2D image data of the region of interest of the subject. The device for guidance during medical procedures is configured to provide the generated projection image, which is based on the provided 3D image data and the provided current 2D image data. The display arrangement is configured to present the projection image as guidance during a medical procedure.

According to an example, the medical imaging system is provided as an X-ray imaging system configured to provide the current 2D image data as 2D X-ray image data. In an option, the data processor is configured to generate the projection image with a viewing direction aligned to a viewing direction of the 2D X-ray image data. In a further option, the X-ray imaging system is configured to also generate the 3D image data of the subject.

According to an example, external tracking of the interventional device is provided, comprising at least one of the group of electromagnetic tracking and optical tracking. The electromagnetic tracking is applied for registration and determination of the transformation when subject remains in place. The current 2D image data is used for registration and determination of the transformation when relative movement occurs.

According to the present invention, also a method for guidance during medical procedures is provided. The method comprises the following steps:
- providing 3D image data of a region of interest of a subject;
- providing current 2D image data of the region of interest;
- registering the current 2D image data with the 3D image data to determine a first transformation;
- identifying non-linear and linear components of the determined first transformation;
- applying the identified linear components of the first transformation to the 3D image data;
- generating a projection image from the 3D image data with the linear components applied to the 3D image data; and
- providing the projection image as guidance during a medical procedure.

In an example, the generated image is an X-ray image in general, i.e. from its appearance it mimics a fluoroscopy image. The projection image so-to-speak simulates a live view, which results in improving confidence level on side of the user, e.g. a surgeon. Instead of a real X-ray image, the projection image provides an image that looks like an X-ray image. The device thus simulates an X-ray imaging device for live X-ray imaging.

According to an aspect, producing a virtual stabilized view of live fluoroscopy from patient specific pre-operative imaging is provided.

In an example, a software package is provided to be integrated into C-arm hardware. In another example, a standalone controller is provided that communicates with the C-arm system and a picture archiving and communication (PAC) system.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a device for guidance during medical procedures.
Fig. 2 shows an example of a system for guidance during medical interventions.
Fig. 3 shows basic steps of an example of a method for guidance during medical procedures.
Fig. 4 shows an example of a workflow for view stabilizing for guiding an interventional imaging device.
Fig. 5 shows examples of stabilized views.
Fig. 6 shows an example of a further workflow for view stabilizing for guiding an interventional imaging device.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

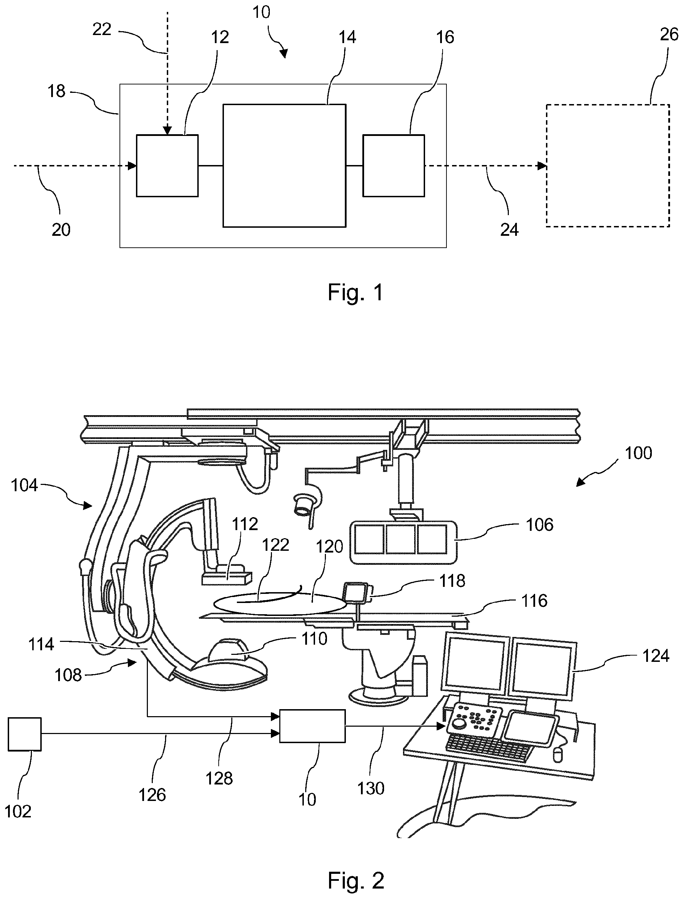

Fig. 1 schematically shows an example of a device 10 for guidance during medical procedures. The device 10 comprises a data input 12, a data processor 14 and an output interface 16. The data input 12 is configured to provide 3D image data of a region of interest of a subject. The data input 12 is also configured to provide current 2D image data of the region of interest. The data processor 14 is configured to register the current 2D image data with the 3D image data to determine a first transformation. The data processor 14 is also configured to identify non-linear and linear components of the determined first transformation. The data processor 14 is also configured to apply the identified linear components of the first transformation to the 3D image data. The data processor 14 is furthermore configured to generate a projection image from the 3D image data with the linear components applied to the 3D image data. The output interface 16 is configured to provide the projection image as guidance during a medical procedure.

The data input 12, the data processor 14 and the output interface 16 can be provided in a common structure, like a common housing, as indicated by frame 18, or even in an integrated manner. In a further option (not shown), they are provided as separate components or units.

A first arrow 20 indicates data supply to the data input 12, i.e. the provision of the 3D image data. A second arrow 22 indicates another data supply to the data input 12, i.e. the provision of the current 2D image data. A third arrow 24 indicates data supply from the output interface 16, i.e. the provision of the projection image. The data-supplies can be provided wire-based or wireless.
In an example, as an option, a display 26 is provided to present the augmented first image. The display 26 is data-connected to the output interface 16.

The first transformation can also be referred to as transformation, as image data transformation, as primary transformation, as main transformation or as situation transformation.

The term "3D image data" relates to spatial data of the subject which has been acquired by a 3D medical imaging procedure, e.g. ultrasound imaging, X-ray imaging or MRT imaging.

The term "current 2D image data" relates to image data provided at a current state, e.g. as live images during a medical procedure or intervention. The image data is provided in an image plane as 2D image data.

The term "to register" relates to computing the spatial relation of the two different image data sets. The spatial relation comprises information on how to manipulate the respective other data for a spatial matching. The registration comprises linear registration parts, i.e. a global registration of the 2D image data within the 3D image data. The registration also comprises non-linear registration parts, i.e. a morphing registration process of the 2D image data to the 3D image data. The linear registration relates to different viewing angles and distances, e.g. caused by movement of a subject support. The non-rigid or non-linear registration relates to deforming of the subject itself, e.g. caused by breathing or other activity like organ movement comprising in particular the heartbeat.

The term "transformation" relates to defining how the 2D image data needs to be transformed, i.e. changed in a broad sense, to be aligned with the 3D data set.

The term "linear" relates to the linear registration parts, or any subset of a linear transformation such as an affine or rigid transformation.

The term "non-linear" relates to the remainder of the transformation not covered by the "linear" part. The non-linear components of the transformation relate to morphing of tissue in order to achieve registration.

The term "projection image" relates to an image that is generated by projecting an object or subject onto a projection surface or projection plane. Structures present within the projected volume can thus contribute to the projection image. An example for projection images are X-ray radiation images.

The term "generate a projection image" relates to an artificially generated image that, for example, mimics an X-ray image.

The term "data input" relates to providing or supplying data for data processing steps. The data input can also be referred to as image data input. The data input can also be referred to as data supply, as image data supply, as image input, as input unit or simply as input. In an example, the image data input is data-connectable to an imaging source arrangement. In an example, the data input is data-connectable to a data storage having stored the image data.

The term "data processor" relates to a processor or part of a processor arrangement that is provided to conduct the computing steps using the data supplied by the data input. The data processor can also be referred to as data processing arrangement, as processor unit or as processor. In an example, the data processor is data-connected to the data input and the output interface.

The term "output interface" relates to an interface for providing the processed or computed data for further purposes. The output interface can also be referred to as output or output unit. In an example, the output interface is data-connectable to a display arrangement or display device. In another example, the output is data-connected to a display.

In an example, fluoroscopic view stabilization is provided using patient-specific CT-derived virtual fluoroscopy.

According to an aspect, a patient's high-resolution pre-operative CT is used to generate a virtual fluoroscopy view that mimics the live fluoroscopic view with distorting movements stabilized. The so-to-speak view stabilization is performed by 2D-3D fluoroscopy-to-CT registration with linear and non-linear components separated, and the separated transformations are used to estimate the stabilized view.

A fluoroscopy-like view is generated using patient specific information, which is stabilized by image registration of a pre-operative CT volume to the live fluoroscopy. The result is a live image which resembles real fluoroscopy of the anatomy and surgical devices that are stable relative to the virtual X-ray source. This view is comfortable for clinicians and resolves the issue of motion during high-precision procedures.

An additional advantage of this method is that for operations which require visualization of clear anatomical structures such as the lung airways or heart chambers, a lower-resolution fluoroscopy image could be sufficient for CT-to-fluoroscopy registration purposes. In this case, the live fluoroscopy serves as a guide for registration rather than for high resolution visualization. Assuming an accurate registration, the work of rendering a high-quality image could be offloaded to the virtual fluoroscopy or DRR-generation process rather than the live imagery, allowing for lower intraoperative radiation usage.

According to an example, it this thus provided to use the patient's own high resolution pre-operative CT scan to generate a virtual stabilized view of the live fluoroscopy using DRR-like visualizations for the application of fluoroscopic-guided lung bronchoscopy. Rather than attempting to augment the live fluoroscopic view after fluoroscopy-to-reference image registration, we propose to generate a reconstructed view from the patient-specific CT scan at the estimated C-arm position, but with the distorting motion subtracted (amounting to a separation of the linear and non-linear components of the fluoro-to-CT registration). In an option, any surgical devices can be segmented live and inserted into the reconstructed virtual view using existing methods for simulating realistic catheters in fluoroscopy. This produces a stabilized view in which the anatomy and device are not moving relative to the X-ray source while maintaining the fluoroscopy-like view and the patient-specific information that clinicians are comfortable working with.

As an advantage, virtual fluoroscopy visualizations are provided with a stabilized view while incorporating detailed patient-specific anatomy or imagery, also improving clinicians' confidence. As an effect, motion compensation is provided stabilizing the view for procedures that require high precision or complex navigation

In an example, the data input 12 is configured to provide the 3D image data as pre-operative 3D image data. The data input 12 is configured to provide the current 2D image data as 2D X-ray image data. The data processor 14 is configured to generate the projection image with a viewing direction aligned to a viewing direction of the 2D X-ray image data. The data processor 14 is configured to provide the projection image as a digitally reconstructed radiograph visualization.

In an example, the 2D X-ray image data is acquired with an X-ray imaging system, for example a C-arm arrangement. The 2D X-ray image data is acquired with a relative imaging position in relation to the subject. The projection image is generated with a viewing direction according to the relative imaging position.

In an example, the data input 12 is configured to provide the current image comprising image data relating to an interventional device inserted in the region of interest. The data processor 14 is configured to perform a segmentation for the current 2D image data to identify a representation of the device. The data processor 14 is configured to apply a second transformation to the representation of the device. The data processor 14 is also configured to combine the transformed representation of the device with the generated projection image.

The second transformation can also be referred to as transformation, as segmentation transformation, as secondary transformation, as minor or subsidiary transformation or as device transformation.

The interventional device may be a catheter, a needle, a forcep or an implant.

In an example, the current image comprises image data relating to identifiable structures that are non-present within the 3D image data; and data processor is configured: to perform a segmentation for the current 2D image data to determine the identifiable structures; to apply a second transformation to the determined identifiable structures; and to combine the transformed determined identifiable structures with the generated projection image.

In an example, the data processor 14 is configured to provide the second transformation as an inverse of the non-linear component of the first transformation.

In an example, the data processor 14 is configured to overlay the transformed representation of the device to the generated projection image. The data processor 14 is configured to provide the transformed representation as a fluoro-like overlay to the generated projection image.

In an example, the data processor 14 is configured to provide the representation of the device comprising a segmented image portion of the 2D image. The data processor 14 is configured to apply the transformation to the segmented image portion.

In an example, the data input 12 is configured to provide a 3D model of the device that is adapted to the segmented representation of the device. The data processor 14 is configured to apply the transformation to the 3D model of the device. The data processor 14 is also configured to provide a projection of the model overlaid to the generated projection image.

In another example, image data of the 3D model is added to the 3D image data before generating the projection image.

In an example, the data input 12 is configured to provide tracking data of an external tracking device tracking an interventional device inserted in the region. The data processor 14 is configured to track the interventional device in relation to the subject based on the tracking data. The data processor 14 is configured to align the coordinate space of the tracked device with an imaging coordinate space. The data processor 14 is configured to apply the second transformation to a graphical representation of the device. The data processor 14 is configured to combine the transformed representation of the device with the generated projection image.

In an example, the region of interest comprises anatomical structures comprising at least one of the group of: airways, lungs, heart and cardiac vascular structures.

Fig. 2 shows an example of a system 100 for guidance during medical interventions. The system 100 comprises an image data source 102, a medical imaging system 104, a device 10 for guidance during medical procedures according to one of the preceding examples and a display arrangement 106. The image data source 102 is configured to provide 3D image data of a region of interest of a subject. The medical imaging system 104 is configured to provide current 2D image data of the region of interest of the subject. The device 10 is configured to provide the generated projection image, which is based on the provided 3D image data and the provided current 2D image data. The display arrangement 106 is configured to present the projection image as guidance during a medical procedure.

In an example, the image data source 102 is a data storage having stored 3D CT image data of the subject. In an option, the image data source 102 is a CT system that is data connected to the device for guidance during medical procedures.

In an option, shown in Fig. 2, the medical imaging system 104 is provided as an X-ray imaging system 108 configured to provide the current 2D image data as 2D X-ray image data. The data processor 14 is configured to generate the projection image with a viewing direction aligned to a viewing direction of the 2D X-ray image data. In an option, additionally or alternatively, the X-ray imaging system 108 is configured to also generate the 3D image data of the subject.

The X-ray imaging system 108 is provided as a C-arm imaging system that comprises an X-ray source 110 and an X-ray detector 112 mounted to opposite ends of a movably mounted C-arm 114.

As an option, the X-ray imaging system 108 is also provided to acquire the 3D image data of the subject. In another example, the X-ray imaging system 108 is a mobile C-arm system.

In Fig. 2, a subject support 116 is provided. Further, a control interface 118 is provided next to the subject support 116. A subject 120 is arranged on the subject support 116. Further, an interventional device 122 is provided partly inserted into the subject 120.

A console 124 is shown in the foreground. The console 124 is arranged for providing user interaction and control options. The console 124 comprises a set of displays, a keyboard with a mouse, a graphic tablet and control knobs and the like. The console 124 enables controlling the various functions and operations of the system 100 for guiding an interventional imaging device. The device 10 for guiding an interventional imaging device can be arranged integrated in the console 124 or as separate device.

The image data source 102 is data-connected to the device 10 for guiding an interventional imaging device, as indicated with a first data connection line 126. The device 10 for guiding an interventional imaging device is further data-connected to the medical imaging system 104, as indicated with a second data connection line 128. The data-connection is provided wire-based or wireless. The device 10 for guiding an interventional imaging device is further data-connected to the console 124, as indicated with a third data connection line 130.

In an example, external tracking is provided comprising at least one of the group of electromagnetic tracking and optical tracking of the interventional device. The electromagnetic tracking is applied for registration and determination of the transformation when subject remains in place. The current 2D image data is used for registration and determination of the transformation when relative movement occurs.

When the subject remains in place, relative movement does not occur. Using electromagnetic tracking results in even further reduced radiation dosage. In an example, an external tracking device is provided to track an interventional device inserted in the region of interest. The data processor 14 is configured: to track the interventional device in relation to the subject based on data from the external tracking device; to align the coordinate space of the tracked device with an imaging coordinate space; to apply the second transformation to a graphical representation of the device; and to combine the transformed representation of the device with the generated projection image.

According to an aspect, a stabilized view is provided by using the 3D image data with improved resolution and increased detailed information and to generate a projection image from this 3D data, while using the current (actual) image data for determining the perspective. In an option, the current (actual) image data is also used for detecting a device or other structures that are not present in the 3D image data and to transfer these to the projection of the 3D image data. In other words, 3D image data, for example pre-operative or also intra-operative image data is used for providing improved guidance. The current 2D image is used for updating the 3D image data to a current situation, thus providing current guidance, i.e. navigation support.

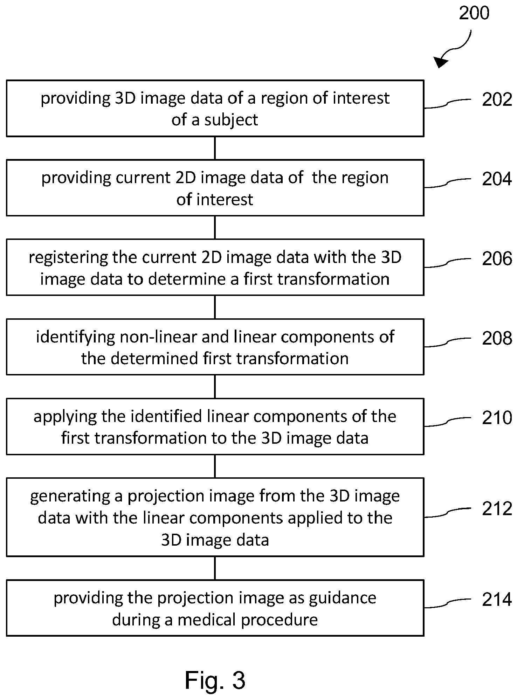

Fig. 3 shows basic steps of an example of a method 200 for guidance during medical procedures. The method 200 comprises the following steps:
- In a first step 202, 3D image data of a region of interest of a subject is provided.
- In a second step 204, current 2D image data of the region of interest is provided.
- In a third step 206, the current 2D image data is registered with the 3D image data to determine a first transformation.
- In a fourth step 208, non-linear and linear components of the determined first transformation are identified.
- In a fifth step 210, the identified linear components of the first transformation are applied to the 3D image data.
- In a sixth step 212, a projection image is generated from the 3D image data with the linear components applied to the 3D image data.
- In a seventh step 214, the projection image is provided as guidance during a medical procedure.

The first step 202 and the second step 204 can also be provided simultaneously or in the reverse order.

In an example, the following steps are provided: A pre-operative CT volume and a live fluoroscopic image are provided and a CT-to-fluoro image registration is performed. Optionally, if surgical devices exist in the image, a segmentation of those devices is performed. A separation of non-linear and linear components of the transformation computed in the registration is provided. The linear component of the transformation is applied to the pre-operative CT volume and a digitally reconstructed radiograph (DRR) is produced from this angle. It is noted that moving the C-arm necessarily produces a rigid motion of the image volume, which is a type of linear motion. Optionally, if surgical devices exist in the image, the inverse of the non-linear component of the transformation from the separation is applied to the segmented device, and any other objects segmented in the live fluoroscopy image that would not be present in the pre-operative CT, and this is overlaid onto the produced DRR using either a model or a fluoro-like overlay. Optionally, post-processing algorithm from the C-arm's image processing module may be applied.

In an example of the method, the 3D image data is pre-operative 3D image data. In an option, the pre-operative 3D image data is pre-operative CT image data. The projection image is a digitally reconstructed radiograph visualization.

In an example of the method 200, the current 2D image data is provided as 2D X-ray image data. The projection image is generated with a viewing direction aligned to a viewing direction of the 2D X-ray image data.

In an example, the current image comprises image data relating to identifiable structures that are non-present within the 3D image data. The method 200 comprises the steps of:
- performing a segmentation for the current 2D image data to determine the identifiable structures;
- applying a second transformation to the determined identifiable structures; and
- combining the transformed determined identifiable structures with the generated projection image.

In an example of the method 200, the current image comprises image data relating to an interventional device inserted in the region of interest. It is further provided the steps of: performing a segmentation for the current 2D image data to identify a representation of the device; applying a second transformation to the representation of the device; and combining the transformed representation of the device with the generated projection image.

In an example of the method 200, the second transformation is provided as an inverse of the non-linear component of the first transformation.

In an example of the method 200, the transformed representation of the device is overlaid to the generated projection image.

In an example of the method 200, the representation of the device comprises a segmented image portion of the 2D image. Further, the transformation is applied to the segmented image portions. In an example of the method 200, the transformed representation is provided as a fluoro-like overlay to the generated projection image.

In an example of the method 200, a 3D model of the device is provided that is adapted to the segmented representation of the device. The transformation is applied to the 3D model of the device. Further, a projection of the model is provided that is overlaid to the generated projection image.

In an example of the method 200, an interventional device inserted in the region of interest is tracked by an external tracking device. It is provided the steps of: tracking the interventional device in relation to the subject; aligning the coordinate space of the tracked device with an imaging coordinate space; applying the second transformation to a graphical representation of the device; and combining the transformed representation of the device with the generated projection image.

In an example of the method, the region of interest comprises anatomical structures comprising at least one of the group of: airways, lungs, heart and cardiac vascular structures.

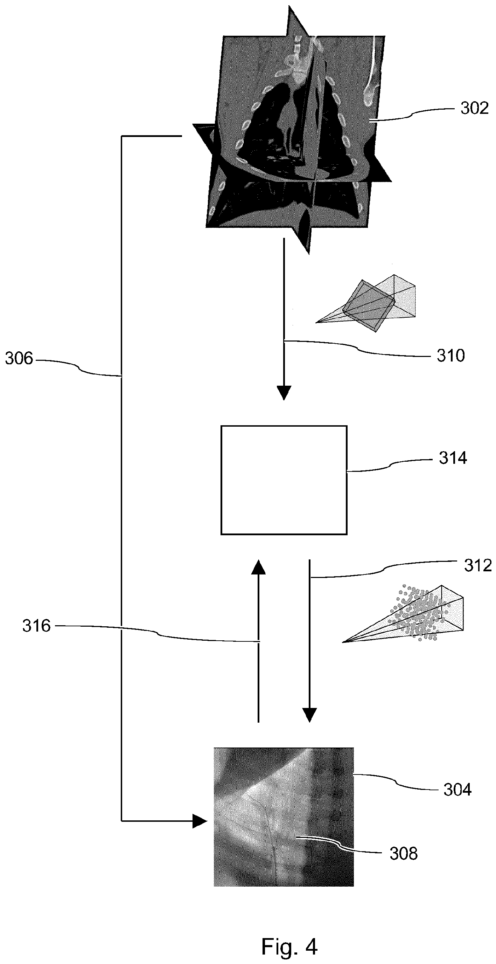

Fig. 4 shows an example of a workflow for view stabilizing for guiding an interventional imaging device. Pre-operative CT data, i.e. a CT volume 302, and a live fluoroscopy image 304 are provided. Transformation parameters *R* · *φ* associated to a CT-to-Fluoro Image Registration are provided, indicated by a first arrow 306. Next, the devices in the live fluoroscopy are segmented 308. Further, the linear components R of the transformation and the non-linear components *φ* of the transformation are separated, as indicated with a first separation arrow 310 for the linear transformation components R, and with a second separation arrow 312 for the non-linear transformation components *φ*. The linear component is applied to the CT volume to generate the stabilized view 314 in form of the DRR. The inverse of the non-linear component *φ⁻¹* is applied to the segmented devices to superimpose them onto the stable DRR, also described as cast device segmentation into stabilized view, indicated with a further arrow 316.

Formulated mathematically, the workflow can be described as follows, where the inputs are:
*I₀* = 3D model or CT image
*F* = live fluoroscopy image
*R* = linear transform component
*φ* = non-linear transform component
*D(x)* = segmented object (point set)

For a particular live fluoroscopy image F and CT volume *I₀,* the transformation *R ∘ φ* between F and *I₀* is computed as is standard for non-linear image to image registration. The stabilized background image is produced by transforming the CT volume by R to produce *I₀ (R* · *x)*. A forward projection is performed through *I₀ (R* · *x)* to produce the DRR background.

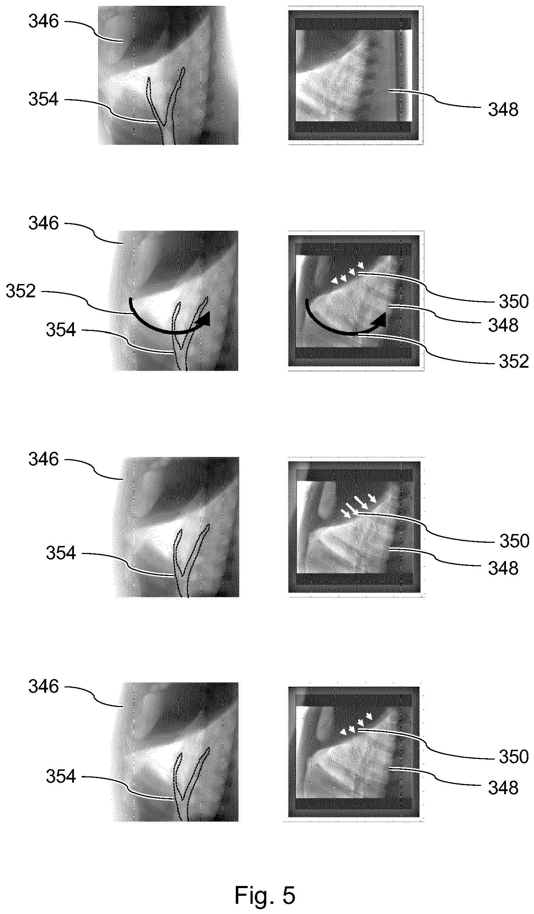

Fig. 5 shows examples of stabilized views 346 in a left column; and a right column shows respective live views 348. First arrows 350 indicate non-linear deformation caused by patient motion. Second arrows 352 indicate linear deformation caused by C-arm / table motion. An anatomical structure 354 like a vascular structure may be subject to deformation, e.g. due to motion.

Fig. 5 shows the effect of stabilization on the background anatomy. *D(x)* is computed from *I₀* as a set of coordinate points (points along a catheter, for instance) and is transformed into the space of the DRR background by the inverse of the non-linear transform component, producing *D(x) ∘ φ*^{-*1*}, which is then superimposed on the DRR background.

Fig. 5 shows the effect of stabilization on anatomical structures in fluoroscopy. A sequence of four video frames of live fluoroscopy is shown from a swine preclinical study. As mentioned above, the left column shows the stabilized virtual view, and the right column shows the live fluoroscopy. Between frames 1 and 2 (counted from the top), the C-arm is rotated to a slightly different angle. Between frames 2 and 3, the subject inhales and the diaphragm and lungs move significantly in the live view. Between frames 3 and 4, the subject exhales, showing movement again. The stabilized background view produced by from the subject's pre-operative CT by *I₀(R* · *x)* shows tracking of the rigid C-arm movement but does not move in response to the subject's anatomical motion, allowing for a more stable view of the lung airways during the procedure.

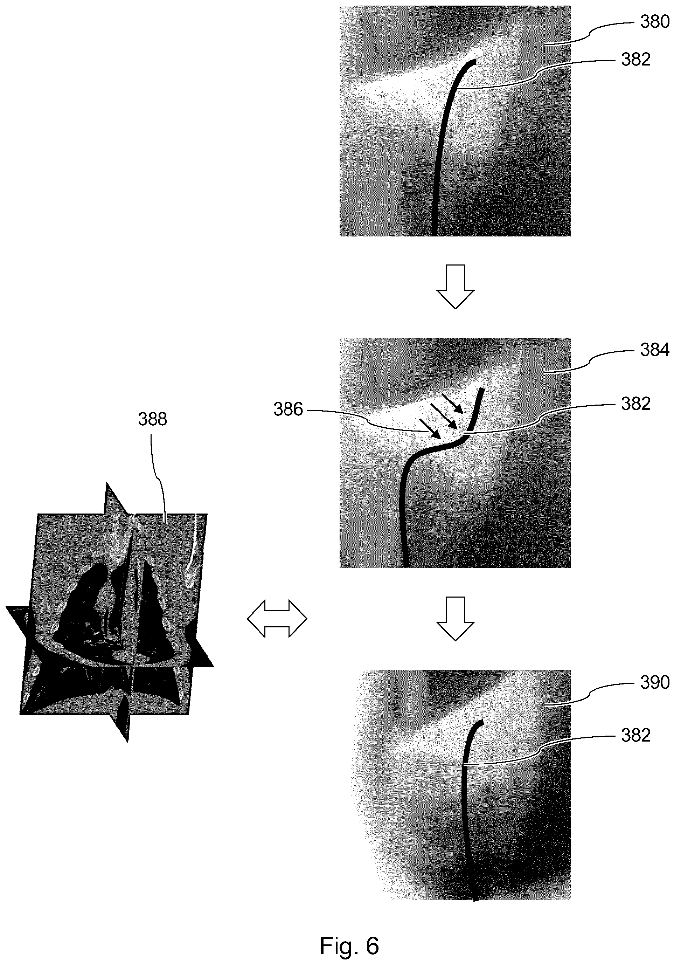

Fig. 6 shows an example of a further workflow for view stabilizing for guiding an interventional imaging device. A first image 380 shows a theoretical "stable" live view with a device 382 superimposed. A second image 384 indicates that motion occurs in live view, indicated by arrows 386. Further, a pre-op CT Volume 388 is provided. A further image 390 shows a stable view generated from CT. Fig. 6 shows the process of superimposing the un-warped surgical tools onto the stabilized anatomical image. Fig. 6 illustrates the process of superimposing devices or other objects not present in the pre-operative imaging into the stabilized view. Starting from top, it is attempted to recover the theoretical stabilized live fluoroscopy, by segmenting an image distorted by movement (second image), un-warping the device using the inverse of the non-linear transformation component, and superimposing it on the stable DRR once they are in the same coordinate space (last image).

An example for an application is the use in interventional X-ray imaging systems intended for endoscopic cardiac or lung procedures. Further, fluoroscopically-guided procedures that incorporate pre-operative CT imaging in the workflow are suitable to generate the proposed virtual stabilized views. Examples of clinical applications also include peripheral lung nodule biopsy and cardiac valve repair surgery.

In operation of the imaging system, DRR-like renderings are provided that are similar to fluoroscopy but not identical, in an example. Thus, stabilization of the live view under large patient motion while displaying a fluoroscopy-like image is provided using the above proposed technology.

In an example, a pre-operative 3D model of the individual patient's lungs or anatomy to be operated on is provided, for example by a data storage. This model could take the form of a point cloud, mesh, volumetric image (for instance, computed tomography), or otherwise.

Further, live intraoperative imagery is provided. This could take the form of: a 2D projection X-ray, such as fluoroscopy from a C-arm system, or 3D imaging such as cone beam CT or ultrasound.

In an option, in the presence of surgical devices or other objects that are known to be present in the live intraoperative imagery, but not present in the pre-operative imagery, the real-time outline of these objects is detected or segmented. Objects may include catheters, needles, forceps, implants, or otherwise. Detection may be computed using, for example, active-contour segmentation of surgical devices or objects; or threshold-based segmentation of surgical devices or objects, or a neural network based object detection (YOLO, etc.) or segmentation (U-Net, etc.).

Further, the pre-operative 3D image/model and a single intraoperative image from the live feed is received as input, for example by an image registration module. As output it is produced a separable transformation between the pre-operative and intraoperative imagery whose components are a linear component and a non-linear component. In an option, this registration is repeated for each fluoroscopy image generated in the live feed. The transformation exists in the space of the pre-operative imagery and has the same dimensionality (3D if a CT volume, for example). This may involve any or more of the following group of: gradient based pre-operative to intra-operative intensity-based registration; feature- or landmark-based pre-operative to intra-operative registration; neural network-based pre-operative to intra-operative image registration; and, in case of 3D pre-operative imagery such as CT and 2D intraoperative imagery such as fluoroscopy, any of the above methods for registration between a CT projection and 2D fluoroscopy.

Receiving, for example by an image transformation module, as input the pre-operative 3D image and the separable transformation is provided. This applies the linear component of the transformation to the pre-operative image, bringing the background anatomy generated from the 3D model into the "stabilized" coordinate space (where the anatomy is stable relative to the imaging source). The output of this is the stabilized background anatomical image.

In the case of intraoperative 2D projection imaging such as fluoroscopy, the generated stabilized image would be a DRR-like rendering from the pre-operative 3D image/model.
In the case of intraoperative 3D volumetric imaging such as CBCT, the generated stabilized image would be a rigid transformation of the pre-operative 3D image/model.

Optionally, the produced device/object segmentation is received as an input, for example by an image transformation module. The inverse of the non-linear component of the transformation is applied to the device/object segmentation, bringing the device/object into the same coordinate space in which the anatomy and device are stable relative to the imaging source. The output of this is the transformed device/object. This could take the form of: a segmentation or model-based overlay in the stabilized coordinate space; or a set of markers for key points along the device/object in the stabilized coordinate space; or an image overlay of the same modality as the intraoperative imaging of the device in the stabilized coordinate space.

Further, the stabilized background anatomical image and the stabilized device/object rendering are received as input, for example by a visualization module, and are superimposed with post-processing and the ensembled image is displayed on a display monitor.

In an example, specific to intraoperative fluoroscopy, the quality of the intraoperative fluoroscopy is degraded to reduce radiation dosage. The intraoperative fluoroscopy is used (only) as a guide for automatic image registration and not for high quality visualization. Because the stabilized renderings generated from the high resolution pre-operative CT would be used for display, resolution/energy of the fluoroscopy can be reduced so long as registration quality remains intact.

In an example, devices or tools used during the procedure are tracked using external hardware, e.g. electromagnetic (EM) tracking, shape sensing and the like. In this case, it is not necessary to track the device visible in fluoroscopy, for example by an image processing controller. Instead, a registration step is provided to align the coordinate space of the tracked device with the imaging coordinate space. The registered device is received, for example by the image transformation module, which device is transformed and brought into the stable coordinate space, as described above.

The term "subject" may also be referred to as individual. The "subject" may further also be referred to as patient, although it is noted that this term does not indicate whether any illness or disease is actually present with the subject.

In an example, a computer program comprising instructions is provided which, when the program is executed by a computer, cause the computer to carry out the method of the preceding example. In an example, a computer program or program element for controlling an apparatus according to one of the examples above is provided, which program or program element, when being executed by a processing unit, is adapted to perform the method steps of one of the method examples above.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for guidance during medical procedures, comprising:
- a data input (12);
- a data processor (14); and
- an output interface (16);
wherein the data input is configured: to provide 3D image data of a region of interest of a subject; and to provide current 2D image data of the region of interest;
wherein the data processor is configured: to register the current 2D image data with the 3D image data to determine a first transformation; to identify non-linear and linear components of the determined first transformation; to apply the identified linear components of the first transformation to the 3D image data; and to generate a projection image from the 3D image data with the linear components applied to the 3D image data; and
wherein the output interface is configured to provide the projection image as guidance during a medical procedure.

2. Device according to claim 1, wherein the data input is configured to provide the 3D image data as pre-operative 3D image data;
wherein the data input is configured to provide the current 2D image data as 2D X-ray image data;
wherein the data processor is configured to generate the projection image with a viewing direction aligned to a viewing direction of the 2D X-ray image data; and
wherein the data processor is configured to provide the projection image as a digitally reconstructed radiograph visualization.

3. Device according to claim 1 or 2, wherein the data input is configured to provide the current image comprising image data relating to an interventional device inserted in the region of interest; and
wherein the data processor is configured: to perform a segmentation for the current 2D image data to identify a representation of the device; to apply a second transformation to the representation of the device; and to combine the transformed representation of the device with the generated projection image.

4. Device according to one of the preceding claims, wherein the data processor is configured to provide the second transformation as an inverse of the non-linear component of the first transformation.

5. Device according to one of the preceding claims, wherein the data processor is configured to overlay the transformed representation of the device to the generated projection image; and
wherein the data processor is configured to provide the transformed representation as a fluoro-like overlay to the generated projection image.

6. Device according to one of the preceding claims, wherein the data processor is configured to: provide the representation of the device comprising a segmented image portion of the 2D image; and to apply the transformation to the segmented image portion.

7. Device according to one of the preceding claims, wherein the data input is configured to provide a 3D model of the device that is adapted to the segmented representation of the device; and
wherein the data processor is configured: to apply the transformation to the 3D model of the device; and to provide a projection of the model overlaid to the generated projection image.

8. Device according to one of the preceding claims, wherein the data input is configured to provide tracking data of an external tracking device tracking an interventional device inserted in the region; and
wherein the data processor is configured: to track the interventional device in relation to the subject based on the tracking data; to align the coordinate space of the tracked device with an imaging coordinate space; to apply the second transformation to a graphical representation of the device; and to combine the transformed representation of the device with the generated projection image.

9. Device according to one of the preceding claims, wherein the region of interest comprises anatomical structures comprising at least one of the group of: airways, lungs, heart and cardiac vascular structures.

10. A system (100) for guidance during medical interventions, comprising:
- an image data source (102);
- a medical imaging system (104);
- a device (10) for guidance during medical procedures according to one of the preceding claims; and
- a display arrangement (106);
wherein the image data source is configured to provide 3D image data of a region of a region of interest of a subject;
wherein the medical imaging system is configured to provide current 2D image data of the region of interest of the subject;
wherein the device is configured to provide the generated projection image, which is based on the provided 3D image data and the provided current 2D image data; and
wherein the display arrangement is configured to present the projection image as guidance during a medical procedure.

11. System according to claim 10, wherein the medical imaging system is provided as an X-ray imaging system (108) configured to provide the current 2D image data as 2D X-ray image data;
wherein the data processor is configured to generate the projection image with a viewing direction aligned to a viewing direction of the 2D X-ray image data; and
wherein the X-ray imaging system is configured to also generate the 3D image data of the subject.

12. System according to claim 10 or 11, wherein external tracking comprising at least one of the group of electromagnetic tracking and optical tracking of the interventional device is provided;
wherein the electromagnetic tracking is applied for registration and determination of the transformation when subject remains in place; and
wherein the current 2D image data is used for registration and determination of the transformation when relative movement occurs.

13. A method (200) for guidance during medical procedures, comprising the following steps:
- providing (202) 3D image data of a region of interest of a subject;
- providing (204) current 2D image data of the region of interest;
- registering (206) the current 2D image data with the 3D image data to determine a first transformation;
- identifying (208) non-linear and linear components of the determined first transformation;
- applying (210) the identified linear components of the first transformation to the 3D image data;
- generating (212) a projection image from the 3D image data with the linear components applied to the 3D image data; and
- providing (214) the projection image as guidance during a medical procedure.

14. Computer program comprising instructions which, when the program is executed by a computer, cause the computer to carry out the method of claim 13.

15. Computer readable medium having stored the computer program of claim 14.
